(19) Europäisches Patentamt / European Patent Office / Office européen des brevets

(11) **EP 2 958 213 B1**

(12) **EUROPEAN PATENT SPECIFICATION**

(45) Date of publication and mention
of the grant of the patent:
**23.05.2018 Bulletin 2018/21**

(51) Int Cl.:
***H02J 50/05*** *(2016.01)*    ***H02J 50/70*** *(2016.01)*

(21) Application number: **13875201.9**

(22) Date of filing: **15.02.2013**

(86) International application number:
**PCT/JP2013/053745**

(87) International publication number:
**WO 2014/125629 (21.08.2014 Gazette 2014/34)**

(54) **ELECTROSTATIC-COUPLING CONTACTLESS POWER SUPPLY DEVICE**

ELEKTROSTATISCH GEKOPPELTE KONTAKTLOSE STROMVERSORGUNGSVORRICHTUNG

DISPOSITIF D'ALIMENTATION ÉLECTRIQUE SANS CONTACT COUPLÉ DE MANIÈRE ÉLECTROSTATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.12.2015 Bulletin 2015/52**

(73) Proprietor: **Fuji Machine Mfg. Co., Ltd.**
**Chiryu-shi**
**Aichi 472-8686 (JP)**

(72) Inventors:
• **NOMURA Takeshi**
**Chiryu-shi**
**Aichi 472-8686 (JP)**
• **TAKIKAWA Shinji**
**Chiryu-shi**
**Aichi 472-8686 (JP)**

(74) Representative: **Grünecker Patent- und Rechtsanwälte**
**PartG mbB**
**Leopoldstraße 4**
**80802 München (DE)**

(56) References cited:
EP-A2- 0 645 838    JP-A- 2010 232 016
JP-A- 2012 110 118   JP-A- 2012 160 676
JP-U- H0 631 182

## Description

Technical Field

The present invention relates to a contactless power supply device that supplies power to an electrical load, which is provided on a movable portion, from a fixing portion in a contactless manner, and more particularly, to an electrostatic-coupling contactless power supply device in which electrodes are disposed so as to face each other and be spaced apart from each other.

Background Art

There are a solder printer, a component mounting machine, a reflow machine, a board inspection machine, and the like as board working machines that produce boards on which a plurality of components are mounted. There are many cases in which these machines are connected to each other by a board conveyance device to construct a board production line. Most of these board working machines include movable portions that move above a board and perform a predetermined operation, and can use linear motor devices as one kind of means for driving the movable portions. Generally, a linear motor device includes a track member in which N poles and S poles of a plurality of magnets are alternately arranged in line along a moving direction, and a movable portion that includes armatures including cores and coils. In the past, a deformable power supply cable has been used to supply power to an electrical load that is provided on the movable portion including a linear motor device. Further, the application of a contactless power supply device has been proposed in recent years to solve adverse effects, such as an increase of a load supplied through a power supply cable or a risk of disconnection caused by metal fatigue .

An electromagnetic induction system using a coil has been widely used in the past as the system of a contactless power supply device. However, an electrostatic-coupling system in which a capacitor is formed by electrodes facing each other so as to be spaced apart from each other also has been used in recent years, and a magnetic field resonance system or the like also has been examined. The use of a contactless power supply device is not limited to a board working machine, and is widespread in industrial machines for other industries, home appliances, and the like. One example of this kind of contactless power supply device is disclosed in PTL 1.

An energy transmitting device disclosed in PTL 1 is mainly characterized in that capacity coupling is present between two separated active electrodes, these electrodes have high electrical potentials, and a zone having a strong field is limited in a space positioned between these electrodes. In addition, claim 2 discloses an aspect in which the active electrodes are joined to a high-pressure/high-frequency generator so that electrical potential energy is supplied to the space between the electrodes. Accordingly, it is possible to perform remote energy transfer. PTL 1 discloses an example of an electrostatic-coupling contactless power supply technique.

Citation List

Patent Literature

PTL 1: JP-T-2009-531009

Summary of Invention

Technical Problem

The technique of PTL 1 discloses the structure of the electrodes for the contactless power supply, but does not disclose a specific structure that can be applied to industrial machines including a board working machine. In the related art, power supply electrodes provided on a side from which power is supplied are provided on a machine base so as to be insulated from the machine base by an insulating plate, an insulating sheet, or the like, and power receiving electrodes provided on a side on which power is received are also provided with an insulating material interposed therebetween. The machine base is generally made of metal, such as iron or aluminum, and is usually grounded so that safety is ensured. According to this structure, undesirable parasitic capacitance is formed between the power supply electrode and the machine base. In addition, parasitic capacitance is also present between the ground, which includes the machine base, and a high-frequency power source circuit. Accordingly, when power is supplied to the power supply electrodes from the high-frequency power source circuit, leak current flows via the parasitic capacitance and the machine base and a power loss is generated. Particularly, since the length and size of the power supply electrode are increased so as to correspond to the moving distance of the movable portion in a structure in which an object to which power is supplied in a contactless manner is the movable portion, a power loss is increased. As a result, power supply efficiency significantly deteriorates.

The invention has been made in consideration of the problems in the background art, and an object of the invention is to provide an electrostatic-coupling contactless power supply device which power supply efficiency of contactless power supply can be improved and cost of materials can be reduced by the reduction of the amount of an electrical insulating material to be used.

Solution to Problem

An invention of an electrostatic-coupling contactless power supply device according to claim 1 for achieving the object includes: power supply electrodes that are made of a conductive material and are disposed on a grounded fixing portion so as to be electrically insulated from the grounded fixing portion; a high-frequency power source circuit that supplies high-frequency power to the power supply electrodes; power receiving electrodes that are disposed on a movable portion movably mounted on the fixing portion, face the power supply electrodes so as to be spaced apart from the power supply electrodes, and receive the high-frequency power in a contactless manner; and a power receiving circuit that converts the high-frequency power received by the power receiving electrodes and supplies the converted high-frequency power to electrical loads provided on the movable portion. Insulating supports, which are made of an electrical insulating material and support the power supply electrodes, are disposed in a part of electrostatic-coupling regions in which parasitic capacitances are formed between the fixing portion and the power supply electrodes; and a remainder of the electrostatic-coupling regions form voids between the insulating supports.

Brief Description of Drawings

[Fig. 1] Fig. 1 is a perspective view showing the entire structure of a component mounting machine to which an electrostatic-coupling contactless power supply device according to an embodiment of the invention can be applied.
[Fig. 2] Fig. 2 is a cross-sectional view conceptually illustrating the electrostatic-coupling contactless power supply device according to the embodiment.
[Fig. 3] Fig. 3 is a partial perspective view of a first arrangement example in which linear insulating supports extend in a moving direction of the linear movable portion.
[Fig. 4] Fig. 4 is a partial perspective view of a second arrangement example in which chip-shaped insulating supports are dotted in the moving direction of the linear movable portion.
[Fig. 5] Fig. 5 is a cross-sectional view conceptually illustrating the structure of an electrostatic-coupling contactless power supply device in the related art.
[Fig. 6] Fig. 6 is a view schematically illustrating a parasitic capacitance that is formed between a power receiving electrode and a side plate of a track member in the embodiment of Figs. 2 and 3.
[Fig. 7] Fig. 7 is a view schematically illustrating a parasitic capacitance that is formed between a power receiving electrode and a bottom plate of a track member in the related art of Fig. 5.

Description of Embodiments

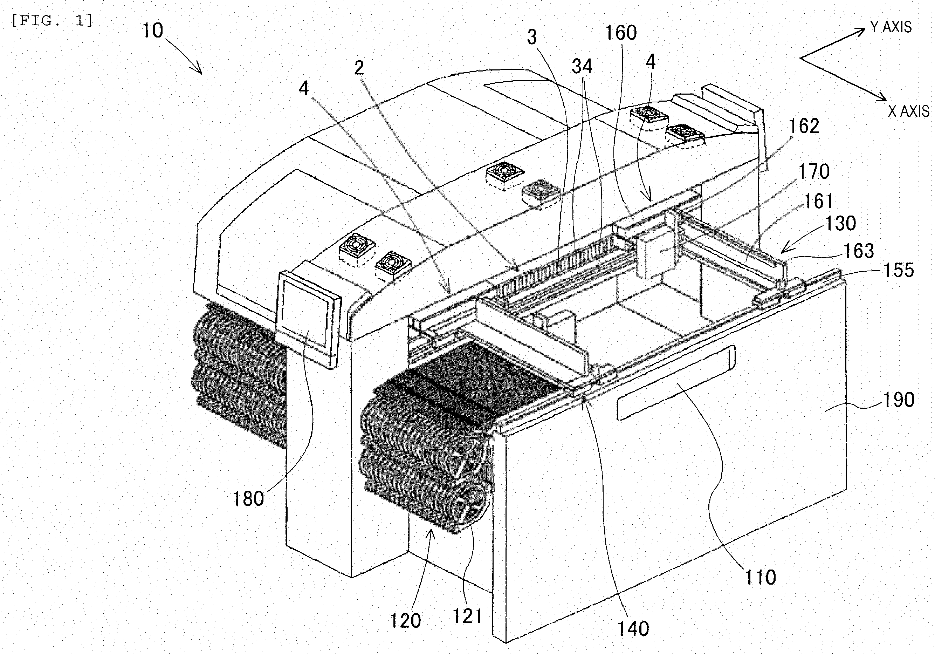

A component mounting machine 10 to which the invention can be applied will be described first with reference to Fig. 1. Fig. 1 is a perspective view showing the entire structure of the component mounting machine 10 to which an electrostatic-coupling contactless power supply device 1 according to an embodiment of the invention can be applied. The component mounting machine 10 is an apparatus for mounting a plurality of components on a board, and includes two sets of component mounting units that have the same structure and are substantially symmetrically disposed. Here, the component mounting unit from which a front right cover of Fig. 1 is removed will be described as an example. Meanwhile, the width direction of the component mounting machine 10, which is directed to the front right side from the rear left side in Fig. 1, is referred to as an X-axis direction, and the longitudinal direction of the component mounting machine 10 is referred to as a Y-axis direction.

The component mounting machine 10 has a structure in which a board conveyance device 110, component supply devices 120, two component transfer devices 130 and 140, and the like are assembled on a machine base 190. The board conveyance device 110 is disposed so as to cross the vicinity of a Y-axial middle portion of the component mounting machine 10 in the X-axis direction. The board conveyance device 110 includes a conveyor (not shown), and conveys a board in the X-axis direction. Further, the board conveyance device 110 includes a clamp unit (not shown), and fixes and holds a board at a predetermined mounting position. The component supply devices 120 are provided at a front portion (a front left side in Fig. 1) and a rear portion (not shown) of the component mounting machine 10 in the Y-axis direction. The component supply devices 120 include a plurality of cassette-type feeders 121, and are configured to continuously supply components to the two component transfer devices 130 and 140 from carrier tapes that are set in the respective feeders 121.

The two component transfer devices 130 and 140 are so-called XY robot-type devices that can move in the X-axis direction and the Y-axis direction. The two component transfer devices 130 and 140 are disposed at the front and rear portions of the component mounting machine 10 in the Y-axis direction so as to face each other. The respective component transfer devices 130 and 140 include a linear motor device 2 for movement in the Y-axis direction.

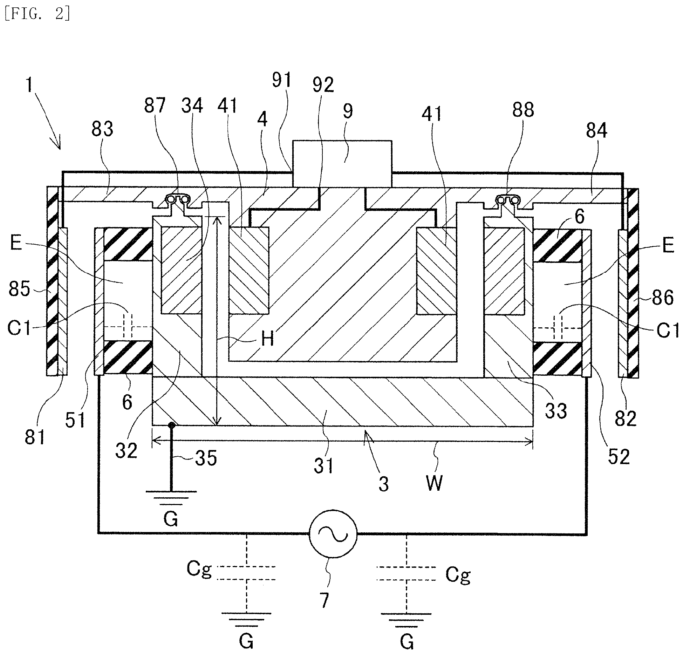

The linear motor device 2 includes a track member 3 and an auxiliary rail 155 that are common to the two component transfer devices 130 and 140, and linear movable portions 4 that are provided for the two component transfer devices 130 and 140, respectively. The track member 3 corresponds to a part of a fixing portion of the invention, and the linear movable portions 4 correspond to movable portions of the invention. The track member 3 extends in the Y-axis direction that is a moving direction of the linear movable portion 4. The track member 3 includes a bottom plate 31 and both side plates 32 and 33 (see Fig. 2), and is formed in the shape of a groove that is opened upward. A plurality of magnets 34 are arranged in line along the Y-axis direction on the inner sides of the side plates 32 and 33 of the track member 3 that face each other.

The linear movable portions 4 are movably mounted in the groove-shaped track member 3. The linear movable portion 4 includes a movable body portion 160, an X-axis rail 161, a mounting head 170, and the like. The movable body portion 160 extends in the Y-axis direction, and armatures, which generate a propulsive force, are disposed on both side surfaces of the movable body portion 160 so as to face the magnets 34 of the track member 3. The armature includes a coil 41 (see Fig. 2) that generates a magnetic field when current flows in the coil, and a core (not illustrated) that increases a magnetic force of the magnetic field. The X-axis rail 161 extends from the movable body portion 160 in the X-axis direction. One end 162 of the X-axis rail 161 is joined to the movable body portion 160, and the other end 163 thereof is movably mounted on the auxiliary rail 155. Accordingly, the X-axis rail 161 is adapted to move integrally with the movable body portion 160 in the Y-axis direction.

The component mounting head 170 is mounted on the X-axis rail 161 and is adapted to move in the X-axis direction. A suction nozzle (not shown) is provided at the lower end of the component mounting head 170. The suction nozzle sucks and picks up a component from the component supply device 120 by using negative pressure, and mounts the component on the board that is held at the mounting position. The component mounting head 170 is provided with a plurality of electrical loads to mount a component. A ball screw feed mechanism (not shown), which is provided on the X-axis rail 161, includes an X-axis motor that rotationally drives a ball screw, and drives the component mounting head 170 in the X-axis direction. The X-axis motor or the coils 41 of the linear motor device 2 are also included in electrical loads provided on the linear movable portion 4.

In addition, the component mounting machine 10 includes a display setting device 180 that exchanges information with an operator, a camera (not shown) that takes an image of a board or a component, and the like.

Next, the electrostatic-coupling contactless power supply device 1 according to the embodiment, which is provided in the component mounting machine 10, will be described with reference to Fig. 2. Fig. 2 is a cross-sectional view conceptually illustrating the electrostatic-coupling contactless power supply device 1 according to the embodiment. A direction perpendicular to the plane of Fig. 2 is the moving direction of the linear movable portion 4, and is an extending direction of the track member 3. As shown in Fig. 2, the track member 3 includes the bottom plate 31 made of a conductive metal material, such as iron or aluminum, and both the side plates 32 and 33, and is formed in the shape of a rectangular groove that is opened upward. The track member 3 is grounded to the ground G through a ground wire 35, so that safety is ensured. The linear movable portions 4 are movably mounted in the groove-shaped track member 3.

Two power supply electrodes 51 and 52 are disposed outside the outer side surfaces of the side plates 32 and 33 of the track member 3 so as to be spaced apart from each other, and are supported on the side plates 32 and 33 by insulating supports 6. The power supply electrodes 51 and 52 are rectangular metal sheets that have substantially the same size as the side plates 32 and 33. The insulating supports 6 are made of an electrical insulating material such as a resin having a low specific dielectric constant. The power supply electrodes 51 and 52 are fixed to the insulating supports 6 and the insulating supports 6 are fixed to the side plates 32 and 33 by adhesion or the like.

Spaces between the power supply electrodes 51 and 52 and the side plates 32 and 33, which face each other so as to be spaced apart from each other, become electrostatic-coupling regions, and undesirable parasitic capacitances $C1$ are formed. The insulating supports 6 are disposed in a part of the electrostatic-coupling regions. In this embodiment, the insulating supports 6 are disposed at both ends of the power supply electrodes 51 and 52 in the width direction so as to be spaced apart from each other in the cross-section perpendicular to the moving direction of the linear movable portion 4. Accordingly, the remainder of the electrostatic-coupling regions form voids E. In Fig. 2, the middle electrostatic-coupling regions, which are longer than the half of the power supply electrode in the width direction, except for both ends of the power supply electrodes 51 and 52 in the width direction, that is, the electrostatic-coupling regions corresponding to an intermediate height except for upper and lower portions of the power supply electrodes in a height direction become voids E.

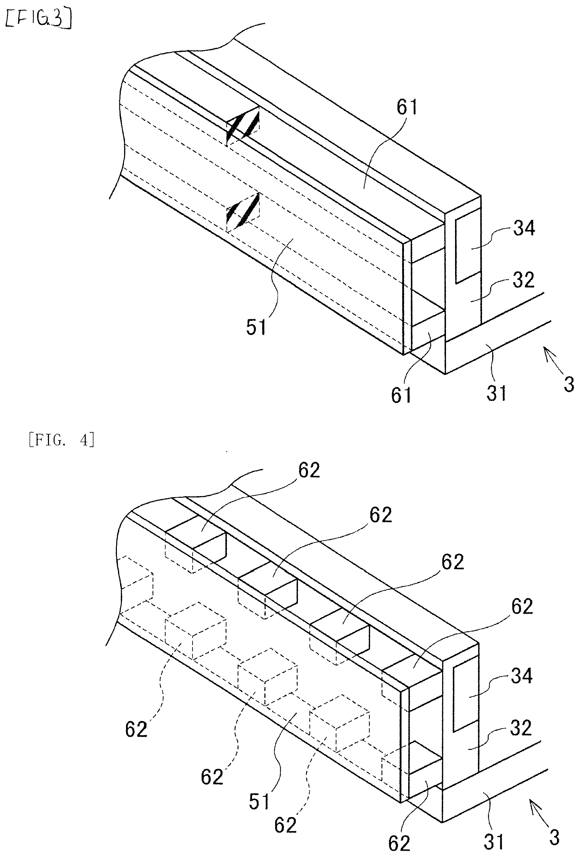

For example, the insulating supports 6 can have shapes shown in Figs. 3 and 4 and can be disposed as shown in Figs. 3 and 4. Fig. 3 is a partial perspective view of a first arrangement example in which linear insulating supports 61 extend in the moving direction of the linear movable portion 4, and Fig. 4 is a partial perspective view of a second arrangement example in which chip-shaped insulating supports 62 are dotted in the moving direction of the linear movable portion 4. In the first arrangement example of Fig. 3, the insulating supports 6 are formed of two linear insulating supports 61 that are elongated and have a rectangular cross-section. The two linear insulating supports 61 continuously extend over substantially the entire length thereof in the moving direction of the linear movable portion 4, and continuously support the two long sides of the power supply electrodes 51 and 52. Further, in the second arrangement example of Fig. 4, the insulating supports 6 are formed of a plurality of small rectangular parallelepiped chip-shaped insulating supports 62. The plurality of chip-shaped insulating supports 62 are discretely dotted in two rows in the moving direction of the linear movable portion 4, and discretely support the two long sides of the power supply electrodes 51 and 52 at a plurality of positions. The linear insulating supports 61 and the chip-shaped insulating supports 62 are line-symmetrically and point-symmetrically arranged within the range of the shapes of the power supply electrodes 51 and 52.

Meanwhile, the shape, the size, the number, and the disposition of the insulating supports 6 are not limited to the examples of Figs. 3 and 4. That is, it is preferable to reduce the size of each insulating support 6 and the number of the insulating supports 6 in a range in which a supporting force for ensuring the flatness of the power supply electrodes 51 and 52 against various kinds of mechanical stress or electrical stress generated during use is obtained. Further, in terms of resisting various kinds of stress, the insulating supports 6 are line-symmetrically or point-symmetrically arranged and a supporting force is distributed uniformly on all of the power supply electrodes 51 and 52 without being biased.

Returning to Fig. 2, a high-frequency power source circuit 7 is disposed close to the fixing portion. The high-frequency power source circuit 7 supplies high-frequency power that corresponds to a range of, for example, 100 kHz to several MHz between the two power supply electrodes 51 and 52. Since the output voltage and the output frequency of the high-frequency power source circuit 7 can be adjusted, a sine wave, a rectangular wave, or the like can be exemplified as the waveform of the output voltage. Parasitic capacitance Cg is present between an output line of the high-frequency power source circuit 7 and the ground G including the track member 3.

Meanwhile, the linear movable portion 4 is provided with two power receiving electrodes 81 and 82. In detail, as shown in Fig. 2, supports 83 and 84 horizontally protrude outward from upper end portions of the side surfaces of the linear movable portion 4. Plate-like insulating supports 85 and 86, which extend downward, are joined to end portions of the supports 83 and 84. The power receiving electrodes 81 and 82 are disposed on surfaces of the insulating supports 85 and 86, which face the track member 3, respectively. The two power receiving electrodes 81 and 82 are disposed over substantially the entire length of the linear movable portion 4, but are much shorter than the power supply electrodes 51 and 52. The two power receiving electrodes 81 and 82 are disposed so as to be parallel to the power supply electrodes 51 and 52 of the track member 3, be spaced apart from the power supply electrodes 51 and 52 of the track member 3, and face the power supply electrodes 51 and 52 of the track member 3, respectively. Accordingly, a capacitor is formed between the power supply electrode 51 and the power receiving electrode 81 and a capacitor is formed between the power supply electrode 52 and the power receiving electrode 82, so that power is supplied in an electrostatic-coupling contactless manner.

The linear movable portion 4 is provided with a power receiving circuit 9 and the above-mentioned electrical loads. The two power receiving electrodes 81 and 82 are electrically connected to input terminals 91 of the power receiving circuit 9. Output terminals 92 of the power receiving circuit 9 are electrically connected to the electrical loads. The power receiving circuit 9 converts high-frequency power, which is received by the power receiving electrodes 81 and 82, and supplies the converted high-frequency power to the electrical loads. The power receiving circuit 9 is configured in accordance with the operating voltage specifications of the electrical loads, and can be formed of, for example, a full-wave rectification circuit, an inverter circuit, or the like. Only the coils 41 are exemplified as the electrical loads in Fig. 2, but the power receiving circuit 9 actually supplies power to a plurality of electrical loads.

Further, a series resonant circuit is generally used for improvement in power supply capacity and power supply efficiency. That is, an inductor for resonance is inserted into and connected to the high-frequency power source circuit 7 or the power receiving circuit 9 so that series resonance occurs at the output frequency of the high-frequency power source circuit 7. Coils are generally used as the inductor for resonance. The inductor for resonance is connected to the capacitors, which are formed by the power supply electrodes 51 and 52 and the power receiving electrodes 81 and 82, in series . The inductance value of the inductor for resonance is determined so that the imaginary part of impedance at the output frequency of the series resonant circuit is zero. Furthermore, the output frequency of the high-frequency power source circuit 7 is also variably adjusted so as to be equal to a resonant frequency.

The linear motor device 2 will be further described. The magnets 34 are disposed on the inner side surfaces of the side plates 32 and 33 of the track member 3. Meanwhile, the coils 41 are disposed on the side surfaces of the linear movable portion 4, and face the magnets 34. Further, ball bearing portions 87 and 88, which can move linearly, are, respectively, disposed in the middle of the lower surfaces of the supports 83 and 84 that protrude from the linear movable portion 4. The linear movable portion 4 is movably mounted on the upper portions of the side plates 32 and 33 of the track member 3 by both the ball bearing portions 87 and 88.

In the electrostatic-coupling contactless power supply device 1 according to the embodiment having the above-mentioned structure, a leak circuit going through the track member 3 and the ground G is formed by two kinds of parasitic capacitances C1 and Cg. For example, a path, which goes through the power supply electrode 51 from one end of a power supply line of the high-frequency power source circuit 7, goes through the track member 3 and the ground G through the parasitic capacitance C1, and returns to the other end of the power supply line of the high-frequency power source circuit 7 through the parasitic capacitance Cg, can be exemplified as paths of the leak circuit. Accordingly, when power is supplied to the power supply electrodes 51 and 52 from the high-frequency power source circuit 7, leak current flows in a plurality of paths of the leak circuit. As a result, a power loss is generated. The magnitude of the leak current changes depending on the output frequency of the high-frequency power source circuit 7 and the parasitic capacitances C1 and Cg. The magnitude of the power loss changes depending on the magnitude of resistance of the leak circuit in addition to the magnitude of the leak current.

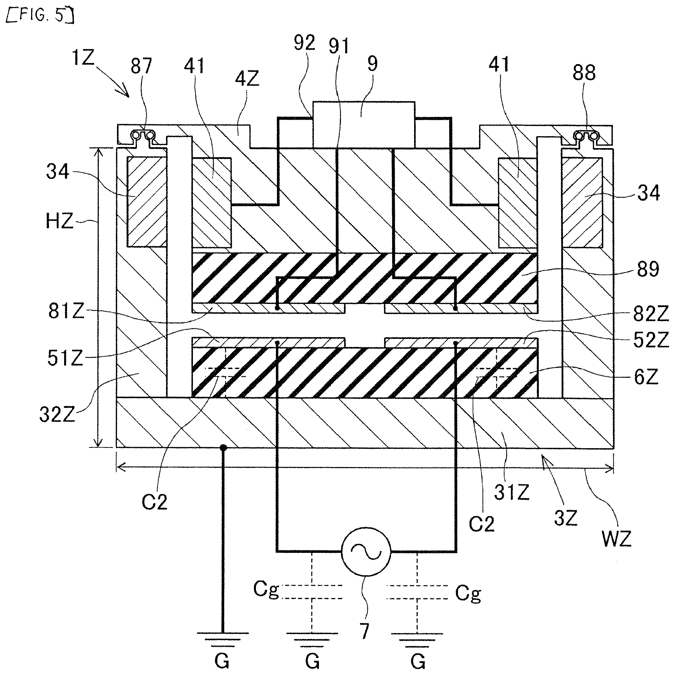

Next, an action for reducing leak current in comparison with the related art by the electrostatic-coupling contactless power supply device 1 according to the embodiment having the above-mentioned structure will be described. Fig. 5 is a cross-sectional view conceptually illustrating the structure of an electrostatic-coupling contactless power supply device 1Z in the related art. Meanwhile, for easy comparison, a structure, which is mounted on the component mounting machine 10 and supplies power to a linear movable portion 4Z in a contactless manner, is also assumed in the related art.

As shown in Fig. 5, in the related art, two power supply electrodes 51Z and 52Z are disposed above the inner bottom face of a bottom plate 31Z of a track member 3Z so as to be spaced apart from the inner bottom surface of the bottom plate 31Z and are supported on the bottom plate 31Z by an insulating plate 6Z. Unlike in the embodiment, substantially the entirety of an electrostatic-coupling region between the power supply electrodes 51Z and 52Z and the bottom plate 31Z, which face each other so as to be spaced apart from each other, is filled with the insulating plate 6Z. Accordingly, voids are hardly present. Unpreferable parasitic capacitances C2 are formed between the power supply electrodes 51Z and 52Z and the track member 3Z. Further, since the widths of the power supply electrodes 51Z and 52Z need to be ensured, a width WZ of the track member 3Z is greater than the width W of the embodiment. Meanwhile, two power receiving electrodes 81Z and 82Z are disposed on the bottom face of the linear movable portion 4Z with an insulating plate 89 interposed therebetween.

Furthermore, magnets 34 of the linear motor device 2 are disposed on the inner side surfaces of side plates 32Z and 33Z of the track member 3Z as in the embodiment. Meanwhile, coils 41 are disposed only at upper portions, which are not obstructed by the power receiving electrodes 81Z and 82Z and the insulating plate 89, of side surfaces of the linear movable portion 4Z. Accordingly, the height of the linear movable portion 4Z in the related art is greater than the height of the embodiment. In addition, a height HZ of the track member 3Z in which the linear movable portion 4Z is put is also greater than the height H of the embodiment. That is, in the embodiment, the width W and the height H of the track member 3 are reduced in comparison with the related art.

Meanwhile, in the related art, the structures of the high-frequency power source circuit 7, the power receiving circuit 9, and the ball bearing portions 87 and 88 are the same as those of the embodiment and an electrical connection method is also the same as that of the embodiment.

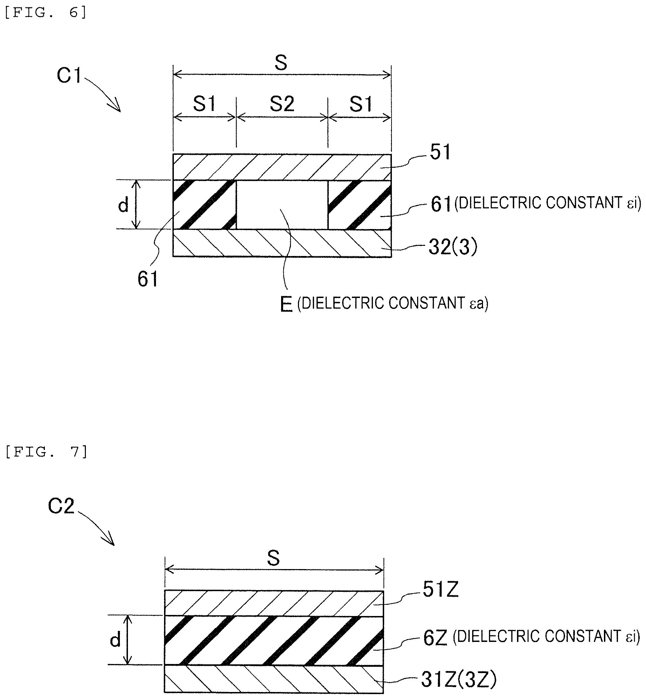

Here, the parasitic capacitances C1 and C2 in the embodiment and the related art will be schematically considered and the magnitudes thereof will be compared with each other. Fig. 6 is a view schematically illustrating the parasitic capacitance C1 that is formed between the power receiving electrode 51 and the side plate 32 of the track member 3 in the embodiment of Figs. 2 and 3. Further, Fig. 7 is a view schematically illustrating the parasitic capacitance C2 that is formed between the power receiving electrode 51Z and the bottom plate 31Z of the track member 3Z in the related art of Fig. 5. For simple description, each of both the electrostatic-coupling regions corresponds to a region that is expressed as a product of an electrode facing area S and a distance d between the electrodes. Furthermore, the linear insulating supports 61 shown in Fig. 3 are considered in the embodiment of Fig. 6. In addition, the linear insulating support 61 of the embodiment and the insulating plate 6Z in the related art are made of the same electrical insulating material, and the specific dielectric constants thereof are denoted by $\varepsilon i$.

In the embodiment of Fig. 6, an area, which is occupied in the electrostatic-coupling region by one linear insulating support 61, is denoted by S1. Accordingly, an area S2 occupied by the void E is an area that is obtained by subtracting two areas S1 from the entire electrode facing area S (S2=S-2*S1). Further, since it is regarded that the parasitic capacitance C1 is formed by the parallel connection of three parallel-plate capacitors, the parasitic capacitance C1 can be obtained by the following equation. However, $\varepsilon 0$ denotes the absolute dielectric constant of vacuum, and $\varepsilon a$ denotes the specific dielectric constant of the void E (air).

[Equation 1]

$$C1 = \varepsilon 0 \cdot \varepsilon i \cdot \frac{S1}{d} + \varepsilon 0 \cdot \varepsilon a \cdot \frac{S2}{d} + \varepsilon 0 \cdot \varepsilon i \cdot \frac{S1}{d}$$

$$= 2 \cdot \varepsilon 0 \cdot \varepsilon i \cdot \frac{S1}{d} + \varepsilon 0 \cdot \varepsilon a \cdot \frac{S2}{d}$$

$$S = 2 \cdot S1 + S2$$

Meanwhile, since it is regarded that the parasitic capacitance C2 in the related art of Fig. 7 is formed by a single parallel-plate capacitor, the parasitic capacitance C2 can be obtained by the following equation.

[Equation 2]

$$C2 = \varepsilon 0 \cdot \varepsilon i \cdot \frac{S}{d}$$

Accordingly, a reduction ratio Rdc (=C1/C2) of the parasitic capacitance in the embodiment is expressed by the following equation.

[Equation 3]

$$Rdc = \frac{C1}{C2} = \frac{2 \cdot \varepsilon i \cdot S1 + \varepsilon a \cdot S2}{\varepsilon i \cdot S}$$

Since the specific dielectric constant $\varepsilon a$ of air is smaller than the specific dielectric constant $\varepsilon i$ of the electrical insulating material, the reduction ratio Rdc is necessarily smaller than 1. For example, when"$\varepsilon a \approx 1$", "$\varepsilon i \approx 3$", and "S1=20%" are satisfied, the reduction ratio Rdc is 0.6. That is, the parasitic capacitance C1 of the embodiment is reduced to 60% of the parasitic capacitance C2 in the related art. In addition, when the chip-shaped insulating supports 62 shown in Fig. 4 are used, an area occupied by the chip-shaped insulating supports 62 is reduced. Accordingly, the reduction ratio Rdc is more significantly reduced. Meanwhile, the parasitic capacitance Cg between the output line of the high-frequency power source circuit 7 and the ground G is not significantly changed in the embodiment and the related art.

Since the parasitic capacitance C1 can be significantly reduced in comparison with the parasitic capacitance C2 in the related art in the embodiment as described above, leak current can be reduced. Accordingly, since a power loss is reduced according to the electrostatic-coupling contactless power supply device 1 of the embodiment, it is possible to improve the power supply efficiency of contactless power supply in comparison with the related art. In other words, it is possible to more efficiently supply power to the coils 41 of the linear motor device 2 of the component mounting machine 10 and the electrical loads provided on the mounting head 170 in a contactless manner than in the related art. In addition, since the amount of the electrical insulating material used for the linear insulating supports 61 or the chip-shaped insulating supports 62 is reduced, it is possible to reduce the cost of materials.

Further, the linear insulating supports 61 or the chip-shaped insulating supports 62 are disposed at both ends of the power supply electrodes 51 and 52 in the width direction so as to be spaced apart from each other, and are disposed so as to extend or be dotted in the moving direction of the linear movable portion 4. Furthermore, the linear insulating supports 61 and the chip-shaped insulating supports 62 are line-symmetrically and point-symmetrically arranged. Accordingly, since a supporting force supporting the power supply electrodes 51 and 52 is distributed without being biased in the embodiment, the flatness of the power supply electrodes 51 and 52 is ensured. As a result, power supply performance is stable.

Further, in the embodiment, the inner side surfaces of the side plates 32 and 33 of the track member 3 are used for the drive of the linear motor device 2 and the outer side surfaces thereof are used to supply power in a contactless manner. Accordingly, the size and weight of the track member 3 can be reduced by the sufficient use of both the inner and outer side surfaces. Furthermore, the height of the linear movable portion 4 can be reduced in comparison with the related art in which the inner bottom face of the bottom plate 31Z of the track member 3Z is used to supply power in a contactless manner. Accordingly, the moment of inertia of the linear movable portion 4 around the ball bearing portions 87 and 88, which correspond to a position where the linear movable portion is mounted, is reduced. Therefore, vibration, which tends to be generated during the acceleration and deceleration of the linear movable portion 4 or the like, can be suppressed in the embodiment.

Meanwhile, the shapes and arrangement of the power supply electrodes 51 and 52 and the insulating supports 6, 61, and 62 are not limited to the above-mentioned embodiment. For example, the linear insulating supports 61 or the chip-shaped insulating supports 62 can be substituted for the insulating plate 6Z in the related art shown in Fig. 5 to form another embodiment. In another embodiment, an effect for improving power supply efficiency is obtained and the size and weight of the track member 3Z cannot be reduced. Further, the materials of the power supply electrodes 51 and 52 or the power receiving electrodes 81 and 82 are not limited to metal, and plastic electrodes that are made of a conductive polymer, electrodes that are formed by forming a metal film on the surface of a core body made of a resin, or the like may be used as the power supply electrodes. The invention can have other various applications and modifications.

According to the above-mentioned embodiment, the electrostatic-coupling contactless power supply device 1 includes: the power supply electrodes 51 and 52 that are made of a conductive material and are disposed on a grounded fixing portion (track member 3) so as to be electrically insulated from the grounded fixing portion; the high-frequency power source circuit 7 that supplies high-frequency power to the power supply electrodes 51 and 52; the power receiving electrodes 81 and 82 that are disposed on a movable portion (linear movable portion 4) movably mounted on the fixing portion, face the power supply electrodes 51 and 52 so as to be spaced apart from the power supply electrodes 51 and 52, and receive the high-frequency power in a contactless manner; and the power receiving circuit 9 that converts the high-frequency power received by the power receiving electrodes 81 and 82 and supplies the converted high-frequency power to electrical loads provided on the movable portion. The insulating supports 6, which are made of an electrical insulating material and support the power supply electrodes 51 and 52, are disposed in a part of electrostatic-coupling regions in which parasitic capacitances C1 are formed between the fixing portion and the power supply electrodes 51 and 52; and the remainder of the electrostatic-coupling regions form voids E.

According to the electrostatic-coupling contactless power supply device 1, the insulating supports, which are made of an electrical insulating material and support the power supply electrodes, are disposed in a part of electrostatic-coupling regions that are formed between the fixing portion and the power supply electrodes, and the remainder of the electrostatic-coupling regions form voids. That is, the ratio of the voids is significantly increased in comparison with the related art in which most of an electrostatic-coupling region is filled with an insulating material such as an insulating plate or an insulating sheet. Since the specific dielectric constant of the void is substantially 1 and is much smaller than the specific dielectric constant of the insulating material, the parasitic capacitance between the fixing portion and the power supply electrode is significantly reduced in comparison with the related art. Accordingly, since leak current and a power loss are reduced, it is possible to improve the power supply efficiency of contactless power supply in comparison with the related art. In addition, since the amount of the electrical insulating material used for the insulating supports is reduced, it is possible to reduce the cost of materials.

Further, the insulating supports 61 and 62 are disposed at both ends of the power supply electrodes 51 and 52 in the width direction so as to be spaced apart from each other in the cross-section perpendicular to the moving direction of the movable portion (linear movable portion 4), and are disposed so as to extend or be dotted in the moving direction of the movable portion.

Accordingly, the insulating supports are disposed at both ends of the power supply electrodes in the width direction so as to be spaced apart from each other, and are disposed so as to extend or be dotted in the moving direction of the movable portion. That is, the insulating supports continuously support the two long sides of the power supply electrodes that are elongated and have a rectangular cross-section, or discretely support the two long sides of the power supply electrodes at a plurality of positions. Accordingly, a required supporting force is ensured and the flatness of the power supply electrode can be maintained. As a result, power supply performance is stable. Furthermore, a void is formed in a wide range in the vicinity of the middle portion of the power supply electrode in the electrostatic-coupling region, and the amount of an electrical insulating material to be used is significantly reduced. Accordingly, an effect for improving power supply efficiency and an effect for reducing the cost of materials are significantly exhibited.

Meanwhile, the insulating supports can also be disposed at three positions, that is, at the middle and both ends of the power supply electrodes in the width direction so as to be spaced apart from each other, and can also be disposed so as to extend or be dotted in the moving direction of the movable portion. In addition, the shape of the insulating support is not limited to the shape of the linear insulating support 61 or the chip-shaped insulating support 62 of the embodiment. For example, the cross-section of the linear insulating support can also be changed into a trapezoid shape from a rectangular shape so that a contact area between the linear insulating supports and the side plates 32 and 33 is larger than a contact area between the linear insulating supports and the power supply electrodes 51 and 52. Further, for example, the chip-shaped insulating supports 62 can also be formed not in a rectangular parallelepiped shape but in a columnar shape.

Furthermore, the insulating supports 61 and 62 are line-symmetrically or point-symmetrically arranged within the range of the shapes of the power supply electrodes 51 and 52. Accordingly, since a supporting force supporting the power supply electrodes is distributed without being biased, the flatness of the power supply electrodes is more reliably ensured. As a result, power supply performance is more stable.

Moreover, in this embodiment, the movable portion (linear movable portion 4) is driven by the linear motor device 2 that includes the plurality of magnets 34 arranged in line on the fixing portion (track member 3) and the coils 41 provided on the movable portion and generating an electromagnetic propulsive force between themselves and the magnets 34 when current flows in the coils; and the coils of the linear motor device are included in the electrical loads. Accordingly, it is possible to supply power to the linear motor device in a contactless manner. Meanwhile, means for driving the movable portion is not limited to the linear motor device, and it is also possible to supply power to, for example, a general AC motor or a general DC motor in a contactless manner.

Further, the fixing portion includes the track member 3 that is made of a conductive material so as to have the shape of a groove opened upward and includes the plurality of magnets 34 arranged in line on the inner side surfaces thereof; the movable portion (linear movable portion 4) is disposed in the groove-shaped track member 3 and includes the coils 41 that are provided on the side surfaces thereof facing the plurality of magnets 34 so as to be spaced apart from the magnets 34; the power supply electrodes 51 and 52 are disposed outside the outer side surfaces of the track member 3; and the power receiving electrodes 81 and 82 are disposed outside the power supply electrodes 51 and 52 and are supported by the supports 83 and 84 that extend from the movable portion. According to this structure, since the inner side surfaces of the track member are used for linear drive and the outer side surfaces thereof are used to supply power in a contactless manner, the size and weight of the track member can be reduced by the sufficient use of both the inner and outer side surfaces. Further, since the height of the movable portion can be reduced in comparison with the related art in which the inner bottom face of the track member is used to supply power in a contactless manner, vibration, which tends to be generated during the acceleration and deceleration of the movable portion, can be suppressed.

Furthermore, the movable portion (linear movable portion 4) is provided in the component mounting machine 10 that mounts a component on a board, and includes the mounting head 170 that performs an operation for mounting a component. Accordingly, it is possible to supply power to the plurality of electrical loads provided on the mounting head of the component mounting machine in a contactless manner. Meanwhile, a board inspection machine, which inspects the appearance of a board, can be provided with the movable portion of the invention, and the movable portion can also include a camera unit that takes an image of the appearance of the board.

Industrial Applicability

The electrostatic-coupling contactless power supply device of the invention is not limited to a board working machine including a component mounting machine, and can also be widely applied to industrial machines for other industries that include movable portions and need to supply power in a contactless manner. In addition, the electrostatic-coupling contactless power supply device can also be used to supply power to a streetcar, which is traveling, in a contactless manner without using a pantograph or the like or to supply power to an electric automobile, which is traveling, from the road surface in a contactless manner.

Reference Signs List

1: ELECTROSTATIC-COUPLING CONTACTLESS POWER SUPPLY DEVICE
2: LINEAR MOTOR DEVICE
3, 3Z: TRACK MEMBER, 31, 31Z: BOTTOM PLATE
32, 32Z, 33, 33Z: SIDE PLATE, 34: MAGNET, 35: GROUND WIRE
4, 4Z: LINEAR MOVABLE PORTION, 41: COIL
51, 51Z, 52, 52Z: POWER SUPPLY ELECTRODE
6: INSULATING SUPPORT, 6Z: INSULATING PLATE
61: LINEAR INSULATING SUPPORT, 62: CHIP-SHAPED INSULATING SUPPORT
7: HIGH-FREQUENCY POWER SOURCE CIRCUIT
81, 81Z, 82, 82Z: POWER RECEIVING ELECTRODE
83, 84: SUPPORT 85, 86: INSULATING SUPPORT

87, 88: BALL BEARING PORTION, 89: INSULATING PLATE
9: POWER RECEIVING CIRCUIT
10: COMPONENT MOUNTING MACHINE

110: BOARD CONVEYANCE DEVICE, 120: COMPONENT SUPPLY DEVICE
130, 140: COMPONENT TRANSFER DEVICE, 170: MOUNTING HEAD

C1, C2, Cg: PARASITIC CAPACITANCE

**Claims**

1. An electrostatic-coupling contactless power supply device (1) comprising:

   power supply electrodes (51, 52) that are made of a conductive material and are disposed on a grounded fixing portion (3) so as to be electrically insulated from the grounded fixing portion (3);
   a high-frequency power source circuit (7) that supplies high-frequency power to the power supply electrodes (51, 52);
   power receiving electrodes (81, 81) that are disposed on a movable portion (4) movably mounted on the fixing portion (3), face the power supply electrodes (51, 52) so as to be spaced apart from the power supply electrodes (51, 52), and receive the high-frequency power in a contactless manner; and
   a power receiving circuit (9) that converts the high-frequency power received by the power receiving electrodes (81, 82) and supplies the converted high-frequency power to an electrical load (41) provided on the movable portion (4), **characterized in that** insulating supports (6, 61, 62), which are made of an electrical insulating material and support the power supply electrodes (51, 52), are disposed in a part of electrostatic-coupling regions in which parasitic capacitances (C1) are formed between the fixing portion (3) and the power supply electrodes (51, 52), and a remainder of the electrostatic-coupling regions form voids (E) between the insulating supports (6, 61, 62).

2. The electrostatic-coupling contactless power supply device (1) according to claim 1,
   wherein the insulating supports (6, 61, 62) are disposed at both ends of the power supply electrodes (51, 52) in a width direction so as to be spaced apart from each other in a cross-section perpendicular to a moving direction of the movable portion (4), and are disposed so as to extend or be dotted in the moving direction of the movable portion (4).

3. The electrostatic-coupling contactless power supply device (1) according to claim 1 or 2,
   wherein the insulating supports (6, 61, 62) are line-symmetrically or point-symmetrically arranged within a range of shapes of the power supply electrodes (51, 52).

4. The electrostatic-coupling contactless power supply device (1) according to any one of claims 1 to 3,
   wherein the movable portion (4) is driven by a linear motor device (2) that includes a plurality of magnets (34) arranged in line on the fixing portion (3) and coils (41) provided on the movable portion (4) and generating an electromagnetic propulsive force between themselves and the magnets (34) when current flows in the coils (41), and the coils (41) are included in the electrical loads (41).

5. The electrostatic-coupling contactless power supply device (1) according to claim 4,
   wherein the fixing portion (3) includes a track member (3) that is made of a conductive material so as to have the shape of a groove opened upward and includes the plurality of magnets (34) arranged in line on inner side surfaces thereof,
   the movable portion (4) is disposed in the groove-shaped track member (3) and includes the coils (41) that are provided on the side surfaces thereof facing the plurality of magnets (34) so as to be spaced apart from the magnets (34),
   the power supply electrodes (51, 52) are disposed outside outer side surfaces of the track member (3), and
   the power receiving electrodes (81, 82) are disposed outside the power supply electrodes (51, 52) and are supported by the supports (83, 84) that extend from the movable portion (4).

6. The electrostatic-coupling contactless power supply device (1) according to any one of claims 1 to 5,
   wherein the movable portion (4) is provided in a component mounting machine (10) that mounts a component on a board, and includes a mounting head (170) that performs an operation for mounting a component.

**Patentansprüche**

1. Elektrostatisch koppelnde kontaktlose Energieversorgungsvorrichtung (1), die umfasst:

   Energiezufuhr-Elektroden (51, 52), die aus einem leitenden Material bestehen und an einem geerdeten Befestigungsabschnitt (3) so angeordnet sind, dass sie gegenüber dem geerdeten Befestigungsabschnitt (3) elektrisch isoliert sind;
   eine Hochfrequenz-Energiequellenschaltung (7), die den Energiezufuhr-Elektroden (51, 52) Hochfrequenz-Energie zuführt;
   Energieempfangs-Elektroden (81, 81), die an einem beweglichen Abschnitt (4) angeordnet sind, der beweglich an dem Befestigungsabschnitt (3) angebracht ist, den Energiezufuhr-Elektroden (51, 52) so zugewandt sind, dass sie von den Energiezufuhr-Elektroden (51, 52) beabstandet sind, und die Hochfrequenz-Energie kontaktlos empfangen; und
   eine Energieempfangs-Schaltung (9), die die über die Energieempfangs-Elektroden (81, 82) empfangene Hochfrequenz-Energie umwandelt und die umgewandelte Hochfrequenz-Energie einer an dem beweglichen Abschnitt (4) vorhandenen elektrischen Last (41) zuführt, **dadurch gekennzeichnet, dass**
   isolierende Träger (6, 61, 62), die aus einem elektrisch isolierenden Material bestehen und die Energiezufuhr-Elektroden (51, 52) tragen, in einem Teil elektrostatisch koppelnder Bereiche angeordnet sind, in dem parasitäre Kapazitäten (C1) zwischen dem Befestigungsabschnitt (3) und den Energiezufuhr-Elektroden (51, 52) ausgebildet sind, und ein verbleibender Teil der elektrostatisch koppelnden Bereiche Leerräume (E) zwischen den isolierenden Trägern (6, 61, 62) bildet.

2. Elektrostatisch koppelnde kontaktlose Energieversorgungsvorrichtung (1) nach Anspruch 1,
   wobei die isolierenden Träger (6, 61, 62) an beiden Enden der Energiezufuhr-Elektroden (51, 52) in einer Breitenrichtung so angeordnet sind, dass sie in einem Querschnitt senkrecht zu einer Bewegungsrichtung des beweglichen Abschnitts (4) voneinander beabstandet sind, und so angeordnet sind, dass sie sich in der Bewegungsrichtung des beweglichen Abschnitts (4) erstrecken oder verteilt sind.

3. Elektrostatisch koppelnde kontaktlose Energieversorgungsvorrichtung (1) nach Anspruch 1 oder 2, wobei die isolierenden Träger (6, 61, 62) liniensymmetrisch oder punktsymmetrisch in einem Bereich von Formen der Energiezufuhr-Elektroden (51, 52) angeordnet sind.

4. Elektrostatisch koppelnde kontaktlose Energieversorgungsvorrichtung (1) nach einem der Ansprüche 1 bis 3,
   wobei der bewegliche Abschnitt (4) von einer Linearmotor-Vorrichtung (2) angetrieben wird, die eine Vielzahl von Magneten (34), die fluchtend an dem Befestigungsabschnitt (3) angeordnet sind, sowie Spulen (41) enthält, die sich an dem beweglichen Abschnitt (4) befinden und eine elektromagnetische Antriebskraft zwischen ihnen selbst und den Magneten (34) erzeugen, wenn Strom in den Spulen (41) fließt, und
   die Spulen (41) in den elektrischen Lasten (41) enthalten sind.

5. Elektrostatisch koppelnde kontaktlose Energieversorgungsvorrichtung (1) nach Anspruch 4,
   wobei der Befestigungsabschnitt (3) ein Bahnelement (3) enthält, das aus einem leitenden Material besteht und die Form einer Rinne hat, die nach oben geöffnet ist, und die Vielzahl von Magneten (34) einschließt, die fluchtend an Innenseitenflächen derselben angeordnet sind,
   der bewegliche Abschnitt (4) in dem rinnenförmigen Bahnelement (3) angeordnet ist und die Spulen (41) enthält, die sich an seinen seitlichen Flächen befinden und der Vielzahl von Magneten (34) so zugewandt sind, dass sie von den Magneten (34) beabstandet sind,
   die Energiezufuhr-Elektroden (51, 52) außerhalb von Außenseitenflächen des Bahnelementes (3) angeordnet sind, und
   die Energieempfangs-Elektroden (81, 82) außerhalb der Energiezufuhr-Elektroden (51, 52) angeordnet sind und von den Trägern (83, 84) getragen werden, die sich von dem beweglichen Abschnitt (4) aus erstrecken.

6. Elektrostatisch koppelnde kontaktlose Energieversorgungsvorrichtung (1) nach einem der Ansprüche 1 bis 5,
   wobei sich der bewegliche Abschnitt (4) in einer Bauteil-Bestückungsmaschine (10) befindet, die eine Platte mit einem Bauteil bestückt, und einen Bestückungskopf (170) enthält, der einen Vorgang zum Bestücken mit einem Bauteil durchführt.

**Revendications**

1. Dispositif d'alimentation électrique sans contact à couplage électrostatique (1), comprenant :

   des électrodes d'alimentation (51, 52) qui sont constituées d'un matériau conducteur et disposées sur une portion de fixation mise à la terre (3) de manière à être isolées électriquement de la portion de fixation mise à la terre (3) ;
   un circuit de source d'alimentation haute fréquence (7) qui fournit une alimentation haute fréquence aux électrodes d'alimentation (51, 52) ;
   des électrodes de réception d'alimentation (81, 81) qui sont disposées sur une portion mobile (4) montée de façon mobile sur la portion de fixation (3), qui font face aux électrodes d'alimentation (51, 52) de manière à être espacées des électrodes d'alimentation (51, 52), et qui reçoivent l'alimentation haute fréquence de manière sans contact ; et
   un circuit de réception d'alimentation (9) qui convertit l'alimentation haute fréquence reçue par les électrodes de réception d'alimentation (81, 82) et qui fournit l'alimentation haute fréquence convertie à une charge électrique (41) pourvue sur la portion mobile (4), **caractérisé en ce que**
   des supports d'isolation (6, 61, 62), qui sont constitués d'un matériau électriquement isolant et supportent les électrodes d'alimentation (51, 52), sont disposés dans une partie des régions de couplage électrostatique dans laquelle des capacités parasites (C1) sont formées entre la portion de fixation (3) et les électrodes d'alimentation (51, 52), et un reste des régions de couplage électrostatique forme des vides (E) entre les supports d'isolation (6, 61, 62).

2. Dispositif d'alimentation électrique sans contact à couplage électrostatique (1) selon la revendication 1, dans lequel les supports d'isolation (6, 61, 62) sont disposés aux deux extrémités des électrodes d'alimentation (51, 52) en direction de la largeur de manière à être espacés dans une section transversale perpendiculaire à une direction de déplacement de la portion mobile (4), et sont disposés de manière à s'étendre ou à être répartis en direction de déplacement de la portion mobile (4).

3. Dispositif d'alimentation électrique sans contact à couplage électrostatique (1) selon la revendication 1 ou 2, dans lequel
   les supports d'isolation (6, 61, 62) sont agencés en symétrie linéaire ou ponctuelle dans une plage de formes des électrodes d'alimentation (51, 52).

4. Dispositif d'alimentation électrique sans contact à couplage électrostatique (1) selon l'une quelconque des revendications 1 à 3, dans lequel
   la portion mobile (4) est commandée par un dispositif à moteur linéaire (2) qui comprend une pluralité d'aimants (34) agencés en ligne sur la portion de fixation (3) et des enroulements (41) pourvus sur la portion mobile (4) et générant une force propulsive électromagnétique entre eux et les aimants (34) quand un courant traverse les enroulements (41), et
   les enroulements (41) sont inclus dans les charges électriques (41).

5. Dispositif d'alimentation électrique sans contact à couplage électrostatique (1) selon la revendication 4, dans lequel la portion de fixation (3) comprend un élément de piste (3) qui est constitué d'un matériau conducteur de manière à présenter la forme d'une rainure ouverte vers le haut et comprend la pluralité d'aimants (34) agencés en ligne sur des surfaces latérales internes correspondantes,
   la portion mobile (4) est disposée dans l'élément de piste en forme de rainure (3) et comprend les enroulements (41) qui sont pourvus sur les surfaces latérales correspondantes qui font face à la pluralité d'aimants (34) de manière à être espacés par rapport aux aimants (34),
   les électrodes d'alimentation (51, 52) sont disposées à l'extérieur de surfaces latérales externes de l'élément de piste (3), et
   les électrodes de réception d'alimentation (81, 82) sont disposées à l'extérieur des électrodes d'alimentation (51, 52) et sont supportées par les supports (83, 84) qui s'étendent depuis la portion mobile (4).

6. Dispositif d'alimentation électrique sans contact à couplage électrostatique (1) selon l'une quelconque des revendications 1 à 5, dans lequel
   la portion mobile (4) est pourvue dans une machine de montage de composants (10) qui monte un composant sur un circuit, et comprend une tête de montage (170) qui met en oeuvre une opération de montage de composant.

[FIG. 1]

[FIG. 2]

[FIG.3]

[FIG. 4]

[FIG. 5]

[FIG. 6]

C1

S

S1 | S2 | S1

51

d

61 (DIELECTRIC CONSTANT εi)

32(3)

61

E (DIELECTRIC CONSTANT εa)

[FIG. 7]

C2

S

51Z

d

6Z (DIELECTRIC CONSTANT εi)

31Z(3Z)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009531009 T